# EUROPÄISCHE PATENTSCHRIFT

(11) **EP 3 090 664 B1**
(45) Veröffentlichungstag und Bekanntmachung des Hinweises auf die Patenterteilung: **29.01.2020**
(21) Anmeldenummer: 16166131.9
(22) Anmeldetag: 20.04.2016
(51) Int. Cl.: A47J 31/44

(54) **WASSERTANK EINES GETRÄNKEAUTOMATEN**
WATER TANK OF A BEVERAGE MACHINE
RÉSERVOIR D'EAU POUR UN AUTOMATE DE BOISSONS

(30) Priorität: 05.05.2015 DE 102015208328
(43) Veröffentlichungstag der Anmeldung: 09.11.2016
(73) Patentinhaber: BSH Hausgeräte GmbH, 81739 München (DE)
(72) Erfinder: Ogrizek, Bostjan, 3320 Velenje (SI); Golcman, Damjan, 3327 Smartno ob Paki (SI); Brezovnik, Peter, 3330 Mozirje (SI)

(56) Entgegenhaltungen:
- EP-A1- 0 404 688
- EP-A1- 1 502 531
- EP-A1- 1 522 245
- WO-A1-2005/072581

## Beschreibung

Die vorliegende Erfindung betrifft einen Wassertank eines Getränkeautomaten, insbesondere eines Kaffeeautomaten, mit einem Behälter und einem diesen nach oben abschließenden Deckel gemäß dem Oberbegriff des Anspruchs 1. Die Erfindung betrifft außerdem einen Getränkeautomaten mit zumindest einem solchen Wassertank.

Üblicherweise werden Wassertanks in Getränkeautomaten abnehmbar ausgestaltet, um diese beispielsweise einfach und schnell unter einem Wasserhahn befüllen zu können. Abnehmbare Wassertanks sind beispielsweise aus der WO 2005/072581 A1 und der EP 1 522 245 A1 bekannt. Ein derart abnehmbarer Wassertank wird üblicherweise ausschließlich bei Kaffeeautomaten im privaten Bereich eingesetzt. Um den Wassertank im gefüllten Zustand wieder problemlos in den Getränkeautomaten bzw. den Kaffeeautomaten einsetzen zu können, muss dieser über eine entsprechende Steifigkeit verfügen. Um diese Steifigkeit erreichen zu können, weisen bekannte Wassertanks oftmals entsprechende Verstärkungsrippen oder Sicken auf. Aus der EP 1 502 531 A1 und der EP 0 404 688 A1 sind zudem Wassertanks bekannt, die eine Bogenform aufweisen. Nach oben abgeschlossen wird ein solcher Wassertank über einen aufsetzbaren Deckel, der das Eindringen von Verunreinigungen zuverlässig verhindert. In diesem Deckel ist dabei normalerweise eine Griffmulde vorgesehen, über welche der Deckel gegriffen und vom Wassertank abgenommen werden kann. Derartige Griffmulden sind jedoch nur durch vergleichsweise komplexe Kunststoffspritzgusswerkzeuge herzustellen, wodurch der Deckel teurer wird.

Die vorliegende Erfindung beschäftigt sich daher mit dem Problem, für einen Wassertank eines Getränkeautomaten der gattungsgemäßen Art eine verbesserte oder zumindest eine alternative Ausführungsform anzugeben, welche sich insbesondere durch eine verbesserte Funktionalität auszeichnet.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die vorliegende Erfindung beruht auf dem allgemeinen Gedanken, bei einem an sich bekannten Wassertank eines Getränkeautomaten, ein Aussteifungselement derart auszubilden bzw. anzuordnen, dass dieses im Zusammenwirken mit einem Deckel einen Hintergriff bildet, wodurch der Deckel einfach von einem Behälter des Wassertanks abgenommen und insbesondere auf die aufwändige und teure Herstellung einer Griffmulde im Deckel selbst verzichtet werden kann. Der erfindungsgemäße Wassertank besitzt dabei den zuvor genannten Behälter sowie den diesen nach oben abschließenden Deckel. Erfindungsgemäß ist nun an einer Behälterwand zumindest eine bis zu einem oberen Behälterrand des Behälters verlaufende und sich nach innen vertiefende Rinne vorgesehen, welche die Funktion des Aussteifungselements, ähnlich einer Sicke, übernimmt. Der Deckel selbst weist einen von diesem in Richtung seiner Flächennormalen abstehenden Deckelrand auf, dessen Außenkontur komplementär zu einer Innenkontur des Behälterrandes ausgebildet ist und dadurch formschlüssig in diesen eingreift. Zusätzlich weist der Deckel erfindungsgemäß einen sogenannten Flächenrand auf, der also in der Ebene der Deckelfläche liegt, und der die zumindest eine Rinne nach oben überdeckt und dadurch einen Hintergriff bzw. einen Eingriff bildet, über welchen der Deckel vergleichsweise einfach abgenommen werden kann. Bei dem erfindungsgemäßen Wassertank ist somit das zur Aussteifung des Behälters vorgesehene Aussteifungselement, erfindungsgemäß die zumindest eine Rinne, zugleich dafür verantwortlich, dass die üblicherweise ansonsten am Deckel vorgesehene Griffmulde entfallen kann. Durch das Vorsehen zumindest einer solchen, nach innen vertieften Rinne im Bereich der Behälterwand kann zudem ein unbeabsichtigtes Hineinfallen des Deckels in den Behälter und damit in den Wassertank erschwert oder sogar verhindert werden. Dabei ist selbstverständlich klar, dass der Begriff "Wassertank" nicht abschließend für einen Wassertank steht, sondern selbstverständlich generell für einen Flüssigkeitstank verwendet werden kann, so dass der eben beschriebene und in der nachfolgenden Beschreibung noch erwähnte Wassertank selbstverständlich generell auch ein Flüssigkeitstank für andere Fluide mit jeweils einem Behälter und einem darauf aufsetzbaren Deckel sein kann. Um den im Bereich des Flächenrandes erwünschten Hintergriff bzw. Hinterschnitt schaffen zu können, ist es erforderlich, dass die Rinne nicht nur in das Behälterinnere vertieft ist, sondern zusätzlich auch stirnseitig nach oben offen ist, um von dem Deckel überdeckt werden zu können.

Um darüber hinaus die Behälterwand und darüber wiederum den Behälter selbst aussteifen zu können, verläuft die Rinne vorzugsweise vertikal und insbesondere sogar vom oberen Behälterrand bis zu einem Boden des Behälters. Durch eine derartige vertikale Längssicke kann die komplette Behälterwand zuverlässig ausgesteift werden.

Bei einer vorteilhaften Weiterbildung der erfindungsgemäßen Lösung sind zwei sich gegenüberliegende Rinnen vorgesehen. Die in den vorherigen Absätzen beschriebene Rinne muss dabei selbstverständlich nicht alleine angeordnet sein, so dass durch ein Vorsehen zweier sich gegenüberliegender Rinnen zwei Hintergriffe geschaffen werden können, über welche der Deckel vergleichsweise einfach abgenommen werden kann. Durch die zwei sich gegenüberliegend angeordneten Rinnen kann der Querschnitt des Wassertanks zusätzlich derart günstig beeinflusst werden, dass das Hineinfallen des Deckels weiter erschwert wird.

Zweckmäßig schließt der Flächenrand des Deckels bündig mit der Behälterwand des Wassertanks ab. Durch eine derartige Ausführungsform steht der Deckel mit seinem Flächenrand nirgends über die Behälterwand über, mit Ausnahme im Bereich der Rinne, wobei jedoch betrachtet auf eine Flucht der Behälterwände der Flächenrand nirgends übersteht. Hierdurch kann ein optisch ansprechendes Design geschaffen werden und zugleich die Möglichkeit, den gesamten Wassertank versenkt in einem Getränkeautomaten anzuordnen.

Bei einer weiteren vorteilhaften Ausführungsform der erfindungsgemäßen Lösung sind/ist der Behälter und/oder der Deckel als einteiliges, insbesondere sogar als einstückiges, Kunststoffspritzgussteil, ausgebildet. Eine Ausbildung des Behälters bzw. des Deckels als Kunststoffspritzgussteil ermöglicht nicht nur eine vergleichsweise flexible Herstellung, insbesondere hinsichtlich des verwendeten Kunststoffs und einer frei wählbaren Farbgebung, sondern ermöglicht zudem auch die vergleichsweise kostengünstige Herstellung dieser Komponenten und damit des Wassertanks insgesamt.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,
- Fig. 1: eine Ansicht auf einen erfindungsgemäßen Wassertank mit aufgesetztem Deckel,
- Fig. 2: eine Darstellung wie in Fig. 1, jedoch ohne Deckel,
- Fig. 3: eine Darstellung wie in Fig. 1, jedoch bei einer Schrägansicht von unten,
- Fig. 4: einen Wassertank mit schräg aufgesetztem Deckel.

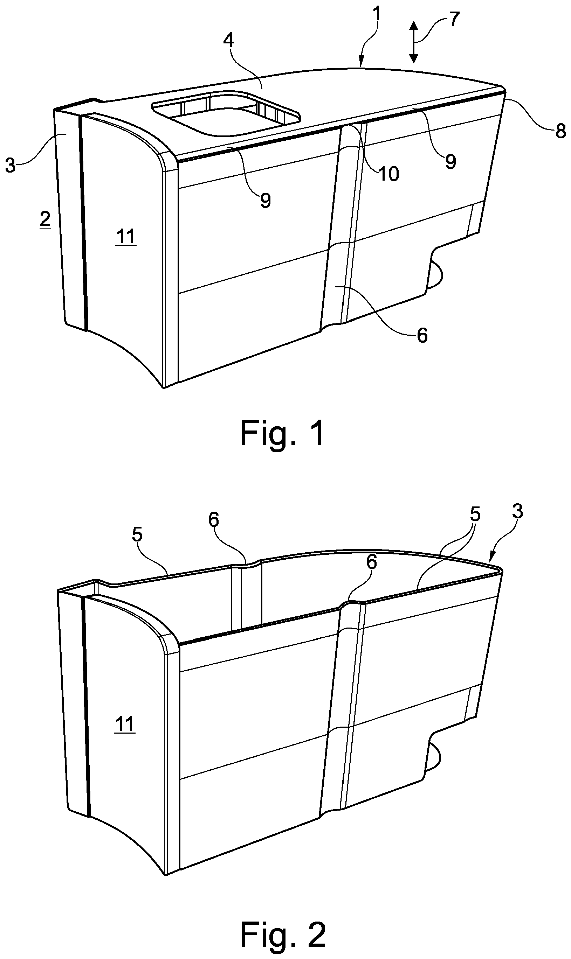

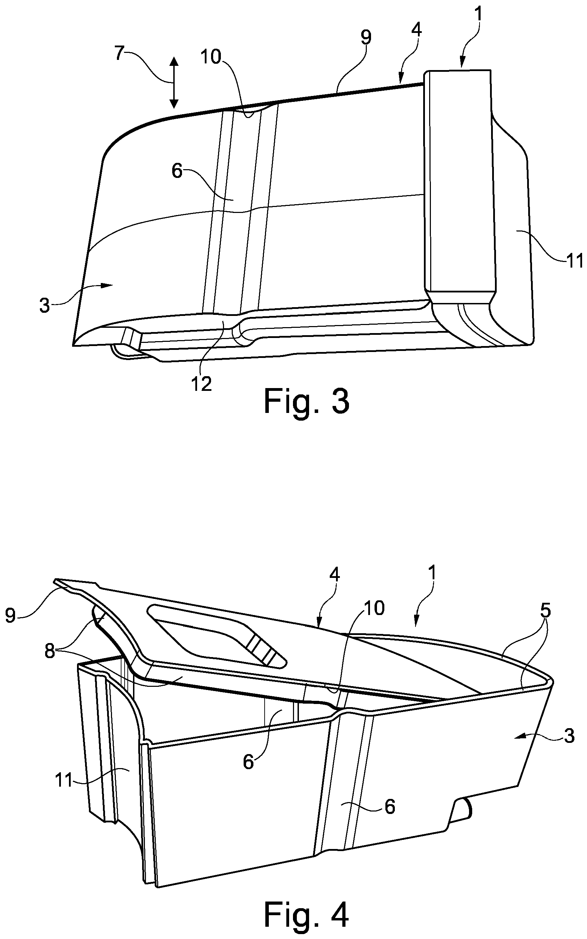

Entsprechend den Fig. 1 bis 4, weist ein erfindungsgemäßer Wassertank 1 eines lediglich angedeuteten Getränkeautomaten 2, welcher beispielsweise als Kaffeeautomat ausgebildet sein kann, einen Behälter 3 sowie einen diesen nach oben abschließenden Deckel 4 auf. Erfindungsgemäß ist nun an einer Behälterwand zumindest eine bis zu einem oberen Behälterrand 5 des Behälters 3 durchlaufende und sich nach innen vertiefende Rinne 6 vorgesehen, wobei der Deckel 4 einen von diesem in Richtung seiner Flächennormalen 7 in den Behälter 3 abstehenden Deckelrand 8 (vergleiche insbesondere die Fig. 4) aufweist, dessen Außenkontur komplementär zu einer Innenkontur des Behälterrandes 5 ausgebildet ist und dadurch formschlüssig in diesen eingreift und in diesem gehalten ist. Zusätzlich besitzt der Deckel 4 einen Flächenrand 9, der die zumindest eine Rinne 6 stirnseitig überdeckt, wie dies beispielsweise gemäß der Fig. 3 deutlich zu erkennen ist, und dadurch einen Hintergriff 10 zum Abnehmen des Deckels 4 vom Behälter 3 bildet.

Die zumindest eine Rinne 6 ist dabei gemäß den Fig. 1 bis 4 im Wesentlichen vertikal verlaufend an der Behälterwand angeordnet und bewirkt einerseits eine Aussteifung der Behälterwand und damit des Behälters 3 sowie andererseits das Schaffen des Hintergriffs 10 zum erleichterten Abnehmen des Deckels 4. Zudem erfüllt die zumindest eine Rinne 6 die Funktion, dass sie den Querschnitt des Behälters 3 zumindest im Bereich des Behälterrandes 5 verengt und dadurch ein Hineinfallen des Deckels 4 zumindest erschwert, vorzugsweise sogar gänzlich verhindert.

Betrachtet man insbesondere die Fig. 2, so kann man erkennen, dass zwei sich gegenüberliegende Rinnen 6 vorgesehen sind, so dass in diesem Fall der Deckel 4 zusammen mit den beiden Rinnen 6 zwei Hintergriffe 10 bildet.

Betrachtet man nochmals die Fig. 1 und 3, so kann man deutlich erkennen, dass der Flächenrand 9 des Deckels 4 bündig mit der Behälterwand des Wassertanks 1 abschließt und dadurch nirgends über die Ebene der Behälterwand übersteht. Ein derartiges bündiges Abschließen des Deckels 4 wird dabei üblicherweise als hohes Qualitätsmerkmal wahrgenommen. Selbstverständlich muss der Flächenrand 9 des Deckels 4 nicht bündig mit einer Außenkontur der jeweiligen Behälterwand abschließen, sondern kann bei einer anderen Behälterwand 11 (vergleiche die Fig. 1) auch bündig mit deren Innenkontur abschließen.

Bei allen gezeigten Ausführungsformen geht/gehen dabei die zumindest eine Rinne 6, hier die beiden Rinnen 6, vom oberen Behälterrand 5 bis zu einem Boden 12 des Behälters 3 durch, wodurch die gesamte Behälterwand von der Rinne 6 durchlaufen und dadurch ausgesteift werden kann.

Generell kann der Behälter 3 und/oder der Deckel 4 zudem als einteiliges, insbesondere sogar als einstückiges, Kunststoffspritzgussteil ausgebildet sein, wodurch deren Herstellung nicht nur kostengünstig, sondern zugleich auch fertigungstechnisch einfach und in nahezu beliebiger Form- bzw. Farbgebung möglich ist.

In der vorangehenden Figurenbeschreibung wird zwar stets von einem Wassertank 1 gesprochen, wobei es selbstverständlich klar ist, dass der Begriff "Wassertank" hier synonym für jegliche Form und Art von Flüssigkeitstank verwendet werden kann, so dass beispielsweise hierunter auch ein Milchtank zu subsummieren ist.

Mit dem erfindungsgemäßen Wassertank 1 und einem mit einem derartigen erfindungsgemäßen Wassertank 1 ausgestatteten Getränkeautomaten 2, beispielsweise einem Kaffeeautomaten, kann dem Wassertank 1 eine deutlich gesteigerte Funktionalität zugewiesen werden, da die Aussteifungselemente in der Art der Rinnen 6 nun nicht mehr alleine der Aussteifung dienen, sondern zugleich zusammen mit dem Deckel 4 einen Hintergriff 10 bilden, der einerseits das Abnehmen des Deckels 4 vom Behälter 3 vereinfacht und andererseits das aufwändige und kostspielige Vorsehen einer Griffmulde im Deckel 4 erübrigt.

### Bezugszeichenliste

- 1: Wassertank
- 2: Getränkeautomat
- 3: Behälter
- 4: Deckel
- 5: Behälterrand
- 6: Rinne
- 7: Flächennormale
- 8: Deckelrand
- 9: Flächenrand
- 10: Hintergriff
- 11: Behälterwand
- 12: Boden

## Patentansprüche

1. Wassertank (1) eines Getränkeautomaten (2), insbesondere eines Kaffeeautomaten, mit einem Behälter (3) und einem diesen nach oben abschließenden Deckel (4), wobei an wenigstens einer Behälterwand zumindest eine bis zu einem oberen Behälterrand (5) des Behälters (3) verlaufende und sich nach innen vertiefende Rinne (6) vorgesehen ist, wobei der Deckel (4) einen von diesem in Richtung seiner Flächennormalen (7) abstehenden Deckelrand (8) aufweist, dessen Außenkontur komplementär zu einer Innenkontur des Behälterrandes (5) ausgebildet ist und dadurch formschlüssig in diesen eingreift, wobei die zumindest eine Rinne (6) als Aussteifungselement ausgebildet ist, **dadurch gekennzeichnet dass** der Deckel (4) einen Flächenrand (9) aufweist, der die zumindest eine Rinne (6) überdeckt und dadurch einen Hintergriff (10) zum Abnehmen des Deckels (4) bildet.

2. Wassertank nach Anspruch 1, **dadurch gekennzeichnet, dass** die zumindest eine Rinne (6) im Wesentlichen vertikal angeordnet ist.

3. Wassertank nach Anspruch 1 oder 2, **dadurch gekennzeichnet, dass** zwei sich gegenüberliegende Rinnen (6) vorgesehen sind.

4. Wassertank nach einem der Ansprüche 1 bis 3, **dadurch gekennzeichnet, dass** der Flächenrand (9) des Deckels (4) bündig mit der Behälterwand des Wassertanks (1) abschließt.

5. Wassertank nach einem der Ansprüche 1 bis 4, **dadurch gekennzeichnet, dass** die zumindest eine Rinne (6) vom oberen Behälterrand (5) bis zu einem Boden (12) des Behälters (3) durchgeht.

6. Wassertank nach einem der Ansprüche 1 bis 5, **dadurch gekennzeichnet, dass** der Behälter (3) und/oder der Deckel (4) als einteiliges, insbesondere sogar als einstückiges, Kunststoffspritzgussteil, ausgebildet sind/ist.

7. Getränkeautomat (2), insbesondere ein Kaffeeautomat, mit zumindest einem Wassertank (1) nach einem der Ansprüche 1 bis 6.

## Claims

1. Water tank (1) of an automatic beverage machine (2), in particular an automatic coffee machine, with a container (3) and a cover (4) closing off the top of said container (3), wherein at least one groove (6) which runs up to an upper container edge (5) of the container (3) and sinks inward is provided on at least one container wall, wherein the cover (4) has a cover edge (8) which protrudes therefrom in the direction of its surface normal (7), the outer contour of which is embodied complementary to an inner contour of the container edge (5) and engages into said container edge (5) in a form-fitting manner, wherein the at least one groove (6) is embodied as a reinforcing element, **characterised in that** the cover (4) has a surface edge (9) which covers the at least one groove (6) and as a result forms a rear grip (10) for detaching the cover (4).

2. Water tank according to claim 1, **characterised in that** the at least one groove (6) is arranged substantially vertically.

3. Water tank according to claim 1 or 2, **characterised in that** two opposing grooves (6) are provided.

4. Water tank according to one of claims 1 to 3, **characterised in that** the surface normal (9) of the cover (4) closes flush with the container wall of the water tank (1).

5. Water tank according to one of claims 1 to 4, **characterised in that** the at least one groove (6) passes from the upper container edge (5) to a bottom (12) of the container (3).

6. Water tank according to one of claims 1 to 5, **characterised in that** the container (3) and/or the cover (4) is/are embodied as an integrated, in particular even as a one-piece plastic injection moulded part.

7. Automatic beverage machine (2), in particular an automatic coffee machine, with at least one water tank (1) according to one of claims 1 to 6.

## Revendications

1. Réservoir d'eau (1) d'un distributeur automatique de boissons (2), en particulier d'une machine à café automatique, avec un récipient (3) et un couvercle (4) se fermant par le haut, sur au moins un flanc du récipient, au moins une rainure (6) étant prévue, laquelle devient plus profonde vers l'intérieur et va jusqu'à une arête (5) supérieure du récipient (3), le couvercle (4) comportant une arête de couvercle (8) éloignée de celui-ci dans le sens de la normale à une surface (7), dont le contour extérieur est réalisé de manière à compléter un contour intérieur de l'arête de récipient (5) et ainsi s'y met en prise par emboîtement, la au moins une rainure (6) étant réalisée comme élément de renfort, **caractérisé en ce que** le couvercle (4) comporte une arête de surface (9) qui recouvre la au moins une rainure (6) et ainsi forme une prise arrière (10) pour enlever le couvercle (4).

2. Réservoir d'eau selon la revendication 1, **caractérisé en ce que** la au moins une rainure (6) est disposée essentiellement à la verticale.

3. Réservoir d'eau selon la revendication 1 ou 2, **caractérisé en ce que** deux rainures (6) l'une en face de l'autre sont prévues.

4. Réservoir d'eau selon l'une des revendications 1 à 3, **caractérisé en ce que** l'arête de surface (9) du couvercle (4) affleure avec le flanc de récipient du réservoir d'eau (1).

5. Réservoir d'eau selon l'une des revendications 1 à 4, **caractérisé en ce que** la au moins une rainure (6) va de l'arête supérieure de récipient (5) jusqu'au fond (12) du récipient (3).

6. Réservoir d'eau selon l'une des revendications 1 à 5, **caractérisé en ce que** le récipient (3) et/ou le couvercle (4) est/sont réalisé/s comme pièce de plastique moulée par injection en une seule partie, en particulier même d'une seule pièce.

7. Distributeur automatique de boissons (2), en particulier machine à café automatique, avec au moins un réservoir d'eau (1) selon l'une des revendications 1 à 6.
